# EUROPEAN PATENT SPECIFICATION

(11) **EP 1 658 167 B1**
(45) Date of publication and mention of the grant of the patent: **23.09.2009**
(21) Application number: 04764263.2
(22) Date of filing: 18.08.2004
(51) Int. Cl.: B29C 37/00, B29C 39/36, B29D 11/00

(54) **DEMOLDING PROCESS**
ENTFORMUNGSVERFAHREN
PROCEDE POUR SEPARER DU MOULE UN OBJET MOULE

(30) Priority: 19.08.2003 EP 03018812
(43) Date of publication of application: 24.05.2006
(73) Proprietor: NOVARTIS AG, 4056 Basel (CH)
(72) Inventor: HEINRICH, Axel, 63743 Aschaffenburg (DE); SEIFERLING, Bernhard, 63773 Goldbach (DE)
(74) Representative: Bohest AG
(86) International application number: PCT/EP2004/009277
(87) International publication number: WO 2005/016615

(56) References cited:
- EP-A- 0 686 487
- EP-A- 0 686 490
- EP-A- 0 775 571
- EP-A- 0 988 961
- GB-A- 521 093
- US-A- 4 985 186
- US-A- 5 690 973
- PATENT ABSTRACTS OF JAPAN vol. 1997, no. 09, 30 September 1997 (1997-09-30) & JP 09 136327 A (MORI MAKOTO), 27 May 1997 (1997-05-27)

## Description

The invention relates to a process for releasing disposable soft contact lenses in accordance with the preamble of the independent patent claim.

Contact lenses, especially so-called "disposable lenses", which, as their name suggests, are intended for single use and are discarded after wearing, are produced more or less fully automatically in a highly automated production process.
One such production process in terms of this principle is described for example in WO-A-98/42497.

A starting material which has already been placed in a mold part, usually a female mold half, and which comprises for example a prepolymer and a photoinitiator, is, after closing the mold which consists of several mold parts, or after closing the molding tool in which a number of molds or mold parts are arranged, exposed to UV light of a certain intensity for a certain duration, whereupon polymerization and/or crosslinking of the starting material takes place, so that the mold subsequently contains a contact lens which does not require finishing work if the mold is suitably designed. In a later part of the production process, the mold or the molding tool is opened again and the contact lens usually adheres to one of the mold halves, in the example mentioned to the female or male mold half.

In that part of the production process which is of particular importance to the present invention, after opening the mold or molding tool, the contact lens is loosened in the mold half, so that it can be removed from the mold half in a subsequent process step, for example by a gripper, without it being damaged during removal by mechanical forces that have to be applied in order to overcome the adhesion between the contact lens and the mold section. Since, when the mold is opened, one cannot be certain to which mold half the contact lens is adhered, a jet of water is applied to both mold halves. The contact lens is thus released mechanically. After having removed the lenses from the mold halves, the mold halves are rinsed and dried before they can be reused. However, there is mechanical pressure on the contact lens when the above-described releasing process (water jet) is carried out, so that it may become damaged, e.g. in the form of tears.

JP-A-09136327 discloses a method for releasing a lens mode of a cured resin from a mold through the introduction of steam into the mold.

EP-A-0 686 490 discloses a method for removing molded soft contact lenses from the individual molds. For that purpose it is suggested to apply steam to the outer surface of the mold, in particular to the outer surface of the back curve mold.

Since disposable soft contact lenses are sensitive articles, it is therefore a task of the present invention to propose a process for the careful release of a disposable soft contact lens from a mold or mold half.

This task is solved according to the invention by a process which is characterized by the features of the independent patent claim. Advantageous variants of the process according to the invention can be seen from the features of the dependent patent claims.

The disposable soft contact lens mentioned initially, which adheres to the mold or mold part, is released in particular by applying steam to the disposable soft contact lens. The thermally-induced deformation of the disposable soft contact lens being treated with steam enables the soft contact lens to be released from the mold or mold part in a more careful manner. There is thus less mechanical stress on the disposable soft contact lens.

The disposable soft contact lens is preferably released by applying a jet of steam, which corresponds to an application of steam for a limited period of time, preferably of up to six seconds, especially two to four seconds. This type of application enables a simple, constructive realization of the process according to the invention to be carried out, whereby e.g. a device is lowered onto appropriately positioned disposable soft contact lenses adhering to mold halves, a jet of steam is applied to the disposable soft contact lenses which are thus released, and then the device is raised again.

Steam is preferably applied to the disposable soft contact lens at a pressure of up to 2 x 10⁵ Pa, especially 1.2 x 10⁵ Pa to 1.6 x 10⁵ Pa. A pressure which is higher than the ambient pressure enables a specific, economic jet of steam to be applied to the soft contact lens, whereby if there is slight excess pressure on the disposable soft contact lens, the mechanical stress is as low as possible.

Steam is advantageously applied to the disposable soft contact lens through a nozzle or borehole. A nozzle or borehole enables a targeted, finely-controllable jet of steam to be applied to the disposable soft contact lens.

In a preferred variant of the process, a multi-function head is used to apply steam to the disposable soft contact lens. The application of steam may be effected using a unit (namely the multi-function head) which is constructed in the same way as for rinsing and drying the mold part.

It is preferable for steam to be applied simultaneously to several disposable soft contact lenses using a multi-function block consisting of several multi-function heads. In this way, several disposable soft contact lenses can be processed at the same time in one step, and the efficiency of the process is increased.

The disposable soft contact lens may first of all be loosened and then removed from the mold part or mold half in a subsequent step, e.g. by a gripper.

Further advantageous variants of the invention may be seen from the following description of an embodiment of the invention, with the assistance of the schematic drawings, in which:
- Fig. 1: shows an embodiment of a multi-function block for carrying out a variant of the process according to the invention, and
- Fig. 2: shows a cross-section through a multi-function head of the multi-function block of Fig. 1.

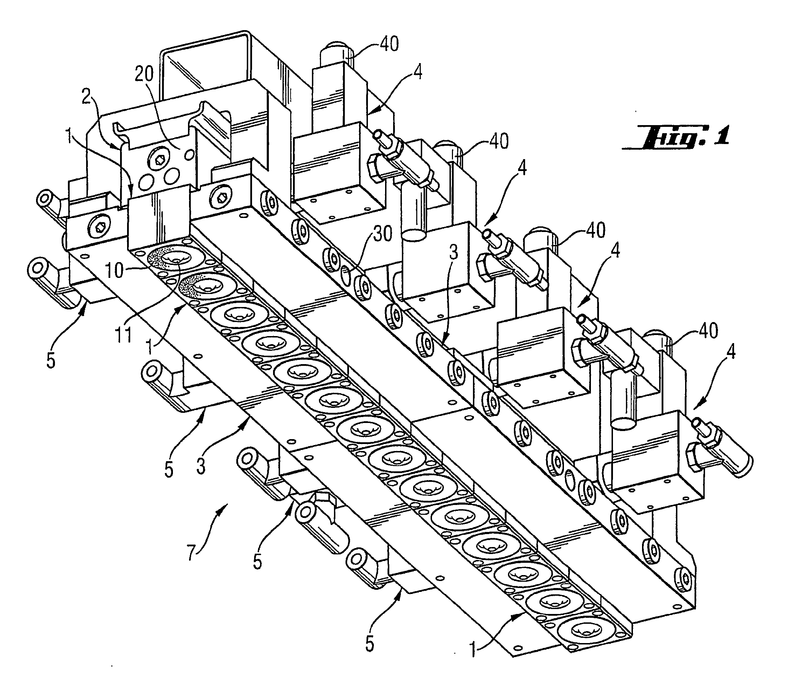

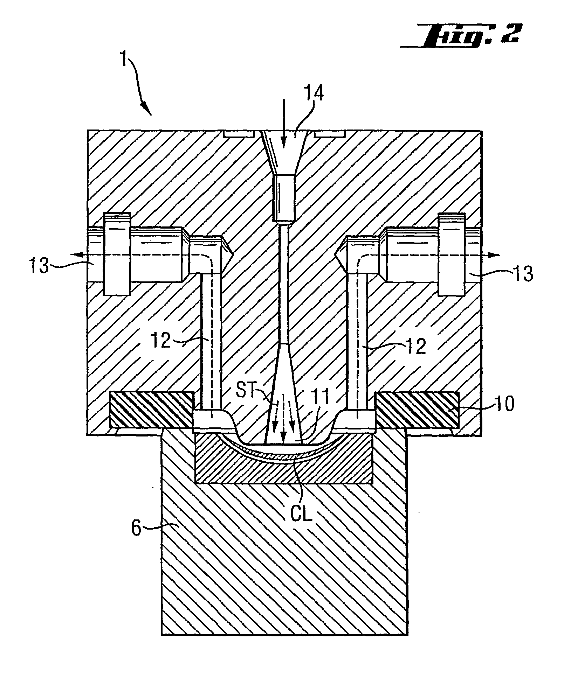

In Fig. 1, an embodiment of a multi-function block 7 for female mold halves 6 (Fig. 2) is illustrated. It is used for carrying out the process according to the invention for the more or less fully automatic production of contact lenses CL (Fig. 2), the so-called "disposable lenses", which as their name suggests are intended for single use and are discarded after wearing. The multi-function block 7 comprises a distributor rail 2, which is connected along one longitudinal side to water/steam valves 4 and along its second longitudinal side to air valves 5, and multi-function heads 1 arranged below the distributor rail 2, on both sides of which overflow rails 3 are arranged, which are parallel to the distributor rail 2. In order to apply a jet of steam to the contact lenses CL (Fig. 2) to be released, which corresponds to an application of steam ST for a limited period of time, preferably two to four seconds, the female mold halves 6 (Fig. 2) in which the contact lenses CL (Fig. 2) are found are positioned below the outlets of nozzles 11, and the multi-function block 7 is lowered, so that the multi-function heads 1 sit as tightly as possible on the female mold halves 6. From common feedpoints 40, steam ST is fed through the water/steam valves 4 and compressed air is fed through the air valves 5 at a pressure of preferably 1.2 x 10⁵ Pa to 1.6 x 10⁵ Pa into a distributor 20 of the distributor rail 2. Through the distributor 20, the steam ST is passed on evenly to the multi-function heads 1, where, through the nozzles 11, it sprays the contact lenses CL (Fig. 2) found in the female mold halves 6 (Fig. 2). Afterwards, the steam ST is exhausted from the multi-function heads 1 through overflow pipes arranged in the overflow rails 3 and is drawn out of the multi-function block 7 through common overflows 30.

Fig. 2 shows a cross-section through a single multi-function head 1 of the multi-function block 7 of Fig. 1. The multi-function head 1 comprises an inlet 14 fed from the top, a nozzle 11 opened at the bottom, two overflows 12 opposite one another, two outlets 13, and one seal 10 located around the nozzle aperture. For the releasing process, the female mold half 6 is placed below the multi-function head 1, on which the aperture of the nozzle 11 is located, and which when viewed broadly in the area of the nozzle aperture 11 has a shape that is roughly complementary to the contour of the female mold half 6, and the multi-function block 7 is lowered, so that the female mold half 6 is sealed tightly by the seal 10. Steam ST is fed into the multi-function head 1 through the inlet 14, and the contact lens CL located in the female mold half 6 is sprayed with a jet of steam from the nozzle 11. The contact lens CL is thus released from the female mold half 6. The steam ST is drawn out of the multi-function head 1 through the two overflows 12 and the two outlets 13.

A multi-function block 7 for male mold halves may be formed in corresponding manner to the embodiment shown in Figs. 1 and 2. In contrast to the convex contour of the area around the nozzle 11 aperture, in a multi-function head 1 for male mold halves, the contour of the area around the nozzle 11 aperture is concave, and when viewed broadly, has a shape that is roughly complementary to the contour of the male mold half.

As has been indicated above, the molds or mold halves are preferably reusable, so that each mold or mold half may be used to produce a large number of contact lenses. Production of a contact lens then usually starts with dispensing a certain amount of a starting material into the female mold half or into a number of female mold halves that may be arranged in a molding tool. The starting material may comprise a PVA-based prepolymer and a photoinitiator. Such materials are disclosed, for example, in EP 0 641 806 A2. After closing the mold or the molding tool, the starting material in the mold or molds is exposed to UV light of a certain intensity for a certain duration, whereupon polymerization and/or crosslinking of the starting material takes place, so that each mold subsequently contains a contact lens which does not require finishing work if the mold is suitably designed. After opening of the molds or of the molding tool, the contact lenses adhere to one of the mold halves. Steam is then applied to the contact lenses in order to release the contact lenses from the respective mold halves, as this is described in more detail above. After removing the released lenses from the mold halves, the mold halves are rinsed and dried before they are reused.

In the afore-described process, the molds or mold halves are reused many times and, accordingly, a permanent high accuracy of the shaping surface is mandatory for maintaining a high quality of the contact lenses so produced. Also, additional requirements such as transparency to UV light may add. In order to fulfill these requirements, the molds or mold halves may be made e.g. from quartz or from any other suitable materials such as described, for example, in EP 0 637 490 A1. In this respect, it is to be noted, that applying the steam to the contact lens does not only result in a lower mechanical stress for the contact lens when compared to the mechanical stress exerted on a contact lens by a water jet, but also results in low thermal stress for the reusable molds or mold halves. At the same time, the contact lenses are reliably released from the molds or mold halves.

## Claims

1. Process for releasing a disposable soft contact lens which is adhered to a mold or a mold part (6), **characterized in that** the soft contact lens (CL) is released by applying steam (ST) to the soft contact lens.

2. Process according to claim 1, **characterized in that** the soft contact lens (CL) is released by applying a jet of steam, which corresponds to an application of the steam (ST) for a limited period of time, preferably of up to six seconds, especially two to four seconds.

3. Process according to claim 1 or 2, **characterized in that** the steam (ST) is applied to the soft contact lens (CL) at a pressure of up to 2 x 10⁵ Pa, especially at 1.2 x 10⁵ Pa to 1.6 x 10⁵ Pa.

4. Process according to any one of claims 1 to 3, **characterized in that** the steam (ST) is applied to the soft contact lens (CL) through a nozzle (11) or a borehole.

5. Process according to any one of claims 1 to 4, **characterized in that** a multi-function head (1) is used to apply the steam (ST).

6. Process according to claim 5, **characterized in that** the steam (ST) is simultaneously applied to several soft contact lenses (CL) by means of a multi-function block (7) comprising several multi-function heads (1).

7. Process according to any one of claims 1 to 6, **characterized in that** the soft contact lens (CL) is firstly loosened and is then removed from the mold section (6) in a subsequent step.

## Patentansprüche

1. Verfahren zum Lösen einer weichen Einweg-Kontaktlinse, welcher an einer Form oder einem Formteil (6) anhaftet, **dadurch gekennzeichnet, dass** die weiche Kontaktlinse (CL) mittels einer Beaufschlagung mit Dampf (ST) gelöst wird.

2. Verfahren nach Anspruch 1, **dadurch gekennzeichnet, dass** das Lösen der weichen Kontaktlinse (CL) durch Beaufschlagung mittels Dampfstoss erfolgt, was einer Beaufschlagung mit Dampf (ST) während eines begrenzten Zeitraums entspricht, der vorzugsweise bis zu sechs Sekunden und insbesondere zwei bis vier Sekunden beträgt.

3. Verfahren nach Anspruch 1 oder 2, **dadurch gekennzeichnet, dass** die weiche Kontaktlinse mit (CL) mit Dampf (ST) mit einem Druck von bis zu 2 x 10⁵ Pa, insbesondere von 1.2 x 10⁵ Pa bis 1.6 x 10⁵ Pa beaufschlagt wird.

4. Verfahren nach einem der Ansprüche 1 bis 3, **dadurch gekennzeichnet, dass** die Beaufschlagung der weichen Kontaktlinse (CL) mit Dampf (ST) durch eine Düse (11) oder eine Bohrung erfolgt.

5. Verfahren nach einem der Ansprüche 1 bis 4, **dadurch gekennzeichnet, dass** zur Beaufschlagung mit Dampf (ST) ein Multifunktionskopf (1) eingesetzt wird.

6. Verfahren nach Anspruch 5, **dadurch gekennzeichnet, dass** mittels eines Multifunktionsblocks (7), welcher mehrere Multifunktionsköpfe (1) umfasst, gleichzeitig mehrere weiche Kontaktlinsen (CL) mit Dampf (ST) beaufschlagt werden.

7. Verfahren nach einem der Ansprüche 1 bis 6, **dadurch gekennzeichnet, dass** die weiche Kontaktlinse (CL) zunächst angelöst wird und dann in einem nachfolgenden Schritt vom Formteil (6) entfernt wird.

## Revendications

1. Procédé de dégagement d'une lentille de contact souple jetable qui est collée à un moule ou à une partie de moule (6), **caractérisé en ce que** la lentille de contact souple (CL) est dégagée par application de vapeur (ST) sur la lentille de contact souple.

2. Procédé selon la revendication 1, **caractérisé en ce que** la lentille de contact souple (CL) est dégagée par application d'un jet de vapeur, qui correspond à une application de la vapeur (ST) pendant un laps de temps limité, allant de préférence jusqu'à six secondes, et en particulier de deux à quatre secondes.

3. Procédé selon la revendication 1 ou 2, **caractérisé en ce que** la vapeur (ST) est appliquée sur la lentille de contact souple (CL) à une pression allant jusqu'à 2 × 10⁵ Pa, et en particulier de 1,2 × 10⁵ Pa à 1,6 × 10⁵ Pa.

4. Procédé selon l'une quelconque des revendications 1 à 3, **caractérisé en ce que** la vapeur (ST) est appliquée sur la lentille de contact souple (CL) à travers une buse (11) ou un alésage.

5. Procédé selon l'une quelconque des revendications 1 à 4, **caractérisé en ce qu'**une tête multifonctions (1) est utilisée pour appliquer la vapeur (ST).

6. Procédé selon la revendication 5, **caractérisé en ce que** la vapeur (ST) est appliquée simultanément sur plusieurs lentilles de contact souples (CL) au moyen d'un bloc multifonctions (7) comprenant plusieurs têtes multifonctions (1).

7. Procédé selon l'une quelconque des revendications 1 à 6, **caractérisé en ce que** la lentille de contact souple (CL) est tout d'abord détachée, puis est retirée de la section de moule (6) dans une étape suivante.
